**Europäisches Patentamt**

**European Patent Office**

**Office européen des brevets**

(19)

(11) **EP 1 445 244 A2**

(12) **EUROPÄISCHE PATENTANMELDUNG**

(43) Veröffentlichungstag:
**11.08.2004 Patentblatt 2004/33**

(51) Int Cl.7: **C04B 35/577**, C04B 35/582,
C04B 35/5835, C04B 35/596,
B22F 7/00

(21) Anmeldenummer: **04405035.9**

(22) Anmeldetag: **19.01.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **04.02.2003 CH 20030161**

(71) Anmelder: **Erbicol SA**
**6828 Balerna (CH)**

(72) Erfinder:
• **Köbel, Stefan**
  **8047 Zurigo (CH)**

• **Vogt, Ulrich**
  **8600 Dübendorf (CH)**
• **Ortona, Alberto**
  **6932 Lugano-Breganzona (CH)**
• **Molinari, Manlio**
  **6830 Chiasso (CH)**

(74) Vertreter: **Gaggini, Carlo, Dipl.Ing.**
**Brevetti-Marchi**
**Via ai Campi 6**
**6982 Agno (CH)**

(54) **Composit-Werkstoff für keramische Heizelemente sowie Verfahren zu seiner Herstellung**

(57)  Die Erfindung betrifft einen Composit-Werkstoff bestehend aus:

(a) einer elektrisch isolierenden Keramik mit einem Anteil zwischen ungefähr 50 und ungefähr 90 Volumenprozent;

(b) einem metallisch leitfähigen Werkstoff mit einem Anteil zwischen ungefähr 10 und 50 Volumenprozent;

(c) Zusätzen, welche das Sinterverhalten des Composit-Werkstoffs modifizieren mit einem Anteil zwischen 0 und ungefähr 10 Volumenprozent, ausgewählt aus der Gruppe der Uebergangsmetalle, metallischen Oxide, metallischen Silicide oder Mischungen derselben;

(d) einem Werkstoff, der entweder aus einer homogenen Mischung der einzelnen Bestandteile besteht, oder aber aus zwei oder mehr granulierten Mischungen mit unterschiedlichen Zusammensetzungen oder aber aus einer oder mehr granulierten Mischungen und nichtgranuliertem Pulver.

Fig 5

EP 1 445 244 A2

**Beschreibung**

Die vorliegende Erfindung betrifft einen Composit-Werkstoff für keramische Heizelemente, sowie ein Verfahren zu seiner Herstellung.

Keramische Werkstoffe als Composit-Werkstoffe werden seit langem erfolgreich dort eingesetzt, wo hohe Temperaturen und oxidierende/korrodierende Atmosphäre den Einsatz anderer Werkstoffe begrenzt. Solch ein Einsatzgebiet ist das Zünden von brennbaren Gas/Luft- sowie Oel/Luft-Gemischen durch Oberflächenzündung. Für die Herstellung eines Zündelementes ist es notwendig, einen keramischen Werkstoff herzustellen, der einen elektrischen Leiter in seinem Inneren enthält, welcher aufgrund seines eigenen elektrischen Widerstandes eine Erwärmung erfährt, wenn ein elektrischer Strom durch diesen Werkstoff geleitet wird.

Die elektrischen Eigenschaften des Composit-Werkstoffs müssen an die Versorgungsspannung angepasst werden, um den Einsatz teurer Umformer zu vermeiden. Typische Versorgungsspannungen sind 6, 12, 24, 120 und 230 V. Die Anforderungen an solche Zündelemente sind dabei unabhängig von der Versorgungsspannung. Neben der Versorgungsspannung sind weitere Parameter für die erfolgreiche Anwendung als Zündelement für gasförmige Brennstoff-Luft-Gemische zu erfüllen, welche für alle Zündelemente gelten, unabhängig von der Versorgungsspannung:

- Aufheizzeit:        <10s
- Minimale Temperatur bei 90% der Nennspannung:       1100°C
- Ungefähre Temperatur bei 100% der Nennspannung:       1300°C
- Maximale Temperatur bei 110% der Nennspannung:       1500°C
- Anschlussleistung:       50 - 150 W

Die Anschlussleistung ist für alle Zünder ähnlich, unabhängig von der Anschlussspannung. Da auch die Bauform und die Grösse für alle Zünder ähnlich ist, liegt es nahe, die elektrischen Eigenschaften des Composit-Werkstoffs so zu variieren, dass der Zünder einen für die jeweilige Anschlussspannung geeigneten Widerstand aufweist.

Der Ohmsche Widerstand eines Körpers wird durch die Gleichung

$$R = R_0 \cdot L/A$$

bestimmt. Es entsprechen
R = elektrischer Widerstand
$R_0$ = spezifischer Widerstand des Werkstoffs
L = Länge des Leiters
A = Querschnittsfläche des Leiters

Die geometrischen Abmessungen eines Zünders werden begrenzt durch die Anforderungen des Marktes, der einen möglichst kleinen und kompakten Zünder verlangt. Die Gesamtlänge heute üblicher Zünder liegt zwischen ungefähr

50 mm und 100 mm,wobei die neuesten Produkte die kürzere Bauform aufweisen. Die Querschnittsfläche des Zünders kann nicht beliebig verkleinert werden, um den Widerstand zu erhöhen. Zum einen sind sehr kleine Querschnitte schwierig zu fertigen und zum anderen nimmt die Festigkeit des Bauteils mit der Querschnittsfläche ab.

Stand der Technik

Für Oberflächenzünder sind bislang Ausführungen aus drei verschiedenen Werkstoffen bekannt:

Oberflächenzünder basierend auf SiC-Keramik werden beschrieben in US 3,875,477 und DE 199 56 767. Heizelemente auf Siliziumnitrid-Basis werden beschrieben in US 5,998,049 und solche basierend auf Composit-Werkstoffen aus nichtleitender Keramik, halbleitender Keramik und metallisch leitendem Werkstoff, werden beschrieben in US 5,514,630.

In US 3,875,477 wird eine monolithische SiC-Keramik beschrieben, welche bei Atmosphärendruck gesintert wird, Sinterdichten von ca. 80 - 85% aufweist und im Temperaturbereich von Raumtemperatur bis 1000°C einen negativen Koeffizienten des elektrischen Widerstandes zeigt. Der dort beschriebene Zünder erreicht 1000°C in weniger als 20 Sekunden bei einem maximalen Strom von 6 A und einer Anschlussspannung von 132 Volt. Der geeignete elektrische Widerstand des SiC-Körpers wird erreicht durch 0.1 bis 0.3% Aluminium, zugegeben in Form von Aluminiumoxid zum Ausganspulver, sowie durch einen zweiten Brand, im Anschluss an den Sinterbrand, welcher in Stickstoffatmosphäre durchgeführt wird und zu einer Dotierung des Körpers mit Stickstoff führt. Die Nachteile dieser Lösung sind die hohe Anschlussleistung des Zünders, das nicht stabile Verhalten aufgrund der NTCR-Eigenschaft des SiC, sowie die relativ lange Aufheizzeit.

Ein Siliziumcarbid-Element ist weiter aus der DE 199 56 767 bekannt. Das dort beschriebene Element besteht aus dicht gesinterter SiC-Keramik, welche wiederum nach dem Sintern in einer geeigneten Atmosphäre mit Stickstoff dotiert wird. Im Gegensatz zu US 3,875,477, kann aufgrund der hohen Dichte der Stickstoff nur in die Oberfläche des Bauteils eintreten, wodurch nur dort eine Erhöhung der elektrischen Leitfähigkeit auftritt. Durch gezieltes Entfernen dieser oberflächlichen Schicht wird in diesem Segment der elektrische Widerstand erhöht und so beim Anlegen der Versorgungsspannung ein Aufheizen auf 1100°C möglich, ohne dass innerhalb von typischerweise 30 Sekunden eine Temperatur von z.B. 1400°C überschritten wird. Ein ähnliches Verhalten kann erreicht werden, indem in Reihe mit dem Siliziumcarbid-Element ein PTC-Element, z.B. eine Glühbirne, geschaltet wird, wodurch die Gesamtanordnung ebenfalls ein zumindest quasi stabiles Verhalten zeigen soll. Der Nachteil dieser Lösung ist das instabile Verhalten des Heizelementes, welches für den Betrieb über typischerweise 30 Sekunden hinaus eine Steuerung bzw. Regelung der Leistung notwendig macht, um ein Ueberhitzen des Heizelements zu verhindern.

Aus US 5,998,049 ist ein keramisches Heizelement bekannt, in welchem der elektrische Leiter in einen Körper aus Siliziumnitrid eingebettet ist. Das dort beschriebene Heizelement selbst besteht aus mindestens einem Carbid, Nitrid oder Silizid der folgenden Metalle: W, Mo, Re, Cr, Ti, Ta, Ni, Co und nicht mehr als 75 vol% BN. Das keramische Heizelement wird durch Laminieren von je einer oberen und unteren Lage Siliziumnitrid-Keramik und einer mittleren Lage, bestehend aus der elektrisch leitfähigen Keramik und anschliessendem Heisspressen, hergestellt. Der Nachteil dieser Lösung ist die aufwändige und damit kostenintensive Herstellung durch das Heisspressverfahren.

Ein Composit-Werkstoff für Oberflächenzünder ist beschrieben in US 5,514,630. Der dort beschriebene Werkstoff besteht aus 50 - 80 vol% einer elektrisch isolierenden Keramik, zu 10 - 45 vol% aus einer halbleitenden Keramik, zu 5 - 25 vol% eines metallischen Leiters und zu 0.5 - 20 vol% eines Werkstoffs, welcher den spezifischen elektrischen Widerstand des Composit-Werkstoffs erhöht. Heizelemente aus diesem Werkstoff werden durch heiss-isostatisches Pressen und anschliessende Hartbearbeitung hergestellt. Die Nachteile dieser Lösung sind die aufwändige und kostenintensive Herstellung durch das Heisspressverfahren, sowie die geringe mechanische Festigkeit der Zünder dieses Typs, welche durch die kleinen Querschnitte von typischerweise 1 mm$^2$ gegeben sind.

<u>Die Erfindung</u>

Die Eignung eines Composit-Werkstoffs für Oberflächenzünder wird wesentlich bestimmt durch dessen thermoelektrische und thermomechanische Eigenschaften. Der Werkstoff muss einen geeigneten Temperatur-Koeffizienten des elektrischen Widerstandes (TCR = Temperature Coefficient of Resistance) aufweisen über vorteilhaft den gesamten Temperaturbereich. Ein negativer Temperatur-Koeffizient (NTCR) bewirkt bei konstanter Anschlussspannung einen grösseren Stromfluss mit steigender Temperatur. Damit steigt auch die Heizleistung des Elements, es stellt sich kein Gleichgewicht zwischen Heizleistung und Temperatur ein, und das Element überhitzt und wird zerstört ("Burn Out"). Ein stark positiver Temperatur-Koeffizient (PTCR) erfordert ein Element mit ausserordentlich homogenem Gefüge. Kleine Schwankungen in der lokalen Leitfähigkeit können dazu führen, dass an Orten höheren Widerstandes eine grössere Spannung abfällt, die Erwärmung dort also grösser ist als in der Umgebung. Dies wiederum führt dort zu einem weiter steigenden Widerstand und kann so zur lokalen Ueberhitzung des Heizelementes führen ("Hot Spots").

Eine der Aufgaben dieser Erfindung besteht gerade darin, diesen Nachteil der bekannten Composit-Werkstoffe zu beseitigen und einen Werkstoff vorzuschlagen, welcher solche Ueberhitzungen nicht kennt.

Der hier vorgeschlagene erfinderische Werkstoff besitzt einen neutralen bis leicht positiven TCR, sodass einerseits ein Ueberhitzen des Elements auch über lange Zeit ausgeschlossen ist und andererseits unvermeidbare Inhomogenitäten im Gefüge des Composit-Werkstoffs nicht zur Bildung von "Hot Spots" führen. Heizelemente für die Anwendung als Oberflächenzünder unterliegen einem zyklischen Aufheizen und Abkühlen. Eine mechanische Beanspruchung des Bauteils ergibt sich aus unterschiedlichen Ausdehnungskoeffizienten der Komponenten des Composit-Werkstoffs. Stark unterschiedliche thermische Ausdehnungskoeffizienten können zur Zerstörung des Bauteils beim Aufheizen oder Abkühlen führen. Eine möglichst kleine Differenz der Koeffizienten ist daher von Vorteil.

Für den in US 5,514,630 beschriebenen Werkstoff finden sich in der Literatur folgende Werte für die einzelnen Komponenten:

| Komponente | Thermischer Ausdehnungskoeffizient | Temperaturbereich |
|---|---|---|
| AlN | $5.0 \times 10^{-6}$ | 300 - 1000°C |
| $Si_3N_4$ | $2.75 \times 10^{-6}$ | 20 - 1000°C |
| SiC(beta) | $4.7 \times 10^{-6}$ | 20 - 2127°C |

(fortgesetzt)

| Komponente | Thermischer Ausdehnungskoeffizient | Temperaturbereich |
|---|---|---|
| $MoSi_2$ | $8.25 \times 10^{-6}$ | $20 - 1070°C$ |

Der hier beschriebene und beanspruchte Composit-Werkstoff besteht zu min. 90 vol% aus Aluminiumoxid und Molybdändisilizid mit den folgenden Eigenschaften:

| Komponente | Thermischer Ausdehnungskoeffizient | Temperaturbereich |
|---|---|---|
| $Al_2O_3$ | $6.5......8.4 \times 10^{-6}$ | $0 - 100°C$ ($6.5 \times 10^{-6}$) |
| $MoSi_2$ | $8.25 \times 10^{-6}$ | $20 - 1070°C$ |

Bei einem Heizelement auf Basis $AlN-SiC-MoSi_2$ nach der US 5,514,630 beträgt die relative Differenz zwischen den Ausdehnungskoeffizienten 75%, während die Differenz bei Elementen auf $Al_2O_3-MoSi_2$-Basis, wie in der vorliegnden Erfindung beansprucht, weniger als 27% beträgt. Aufgrund dessen wird erreicht, dass eine Schädigung des $Al_2O_3-MoSi_2$-Werkstoffs als Folge der Temperatur-Wechselbeanspruchung sehr viel unwahrscheinlicher ist als beim bekannten Composit-Werkstoff.

Stellt man weiter Composit-Werkstoffe aus einem nichtleitenden und einem gut leitenden Werkstoff her, so lässt sich im allgemeinen beobachten, dass Komposite, welche weniger als eine kritische Menge des leitfähigen Werkstoffes enthalten, keine Leitfähigkeit zeigen. Diese Grenze wird als Perkolationsgrenze bezeichnet. Sobald diese Grenze überschritten wird, steigt die Leitfähigkeit sprunghaft an. Dieser überproportionale Anstieg macht es schwierig, Komposite herzustellen, welche im Vergleich zum reinen, leitfähigen Werkstoff eine geringe, aber technisch reproduzierbare Leitfähigkeit besitzen. Eine bekannte Lösung besteht darin, die isolierende Matrix in Form von sehr groben Körnern einzubringen, während die leitfähige Phase in Form von sehr feinen Körnern eingebracht wird. Somit lässt sich der Anteil der leitfähigen Phase weiter reduzieren, die Perkolationsgrenze hin zu niedrigeren Anteilen und höheren Widerständen verschieben. Nachteile dieses bekannten Verfahrens sind die grobkörnige Matrix, welche nur schwer, d.h. z.B. unter hohem Druck, zu einer dichten Keramik gesinert werden kann, sowie das aufwändige Beschichten des groben Matrixpulvers mit der feinkörnigen, leitfähigen Phase.

Eine weitere Aufgabe dieser Erfindung ist die Lösung dieses Problems. Im Sinne dieser Erfindung werden zwei Pulvermischungen hergestellt: eine Mischung, welche einen Anteil des leitfähigen Werkstoffs enthält, sodass ein Composit-Werkstoff aus der Mischung hergestellt werden kann, welcher zuverlässig elektrische Leitfähigkeit zeigt, und zum anderen eine Mischung, welche dieselben Komponenten aufweist, jedoch keine elektrische Leitfähigkeit zeigt, d.h. den elektrisch leitfähigen Werkstoff unterhalb der Perkolationsgrenze aufweist. Alternativ kann anstatt des elektrisch isolierenden Komposits auch der reine Matrix-Werkstoff verwendet werden. Mindestens der nichtleitende Werkstoff wird granuliert, d.h. zu einem Sekundärkorn verarbeitet, welches ungefähr 10 bis 100 mal die Korngrösse des Primärkorns aufweist. Wird auch der leitfähige Werkstoff in gleicher Weise aufbereitet, so lassen sich die resultierenden Pulvermischungen im Anschluss leichter verarbeiten.

Die genannten Aufgaben werden durch eine gesinterte Keramik gelöst, welche der Zusammensetzung nach die kennzeichnenden Merkmale des Anspruchs 1 aufweist.

Verfahrensmässig lassen sich die genannten Ziele auch im Herstellungsverfahren nach den kennzeichnenden Merkmalen des Anspruchs 7 erreichen.

Die Erfindung wird nun mit einem Ausführungsbeispiel und mit den entsprechenden Figuren näher beschrieben.

Diese zeigen:

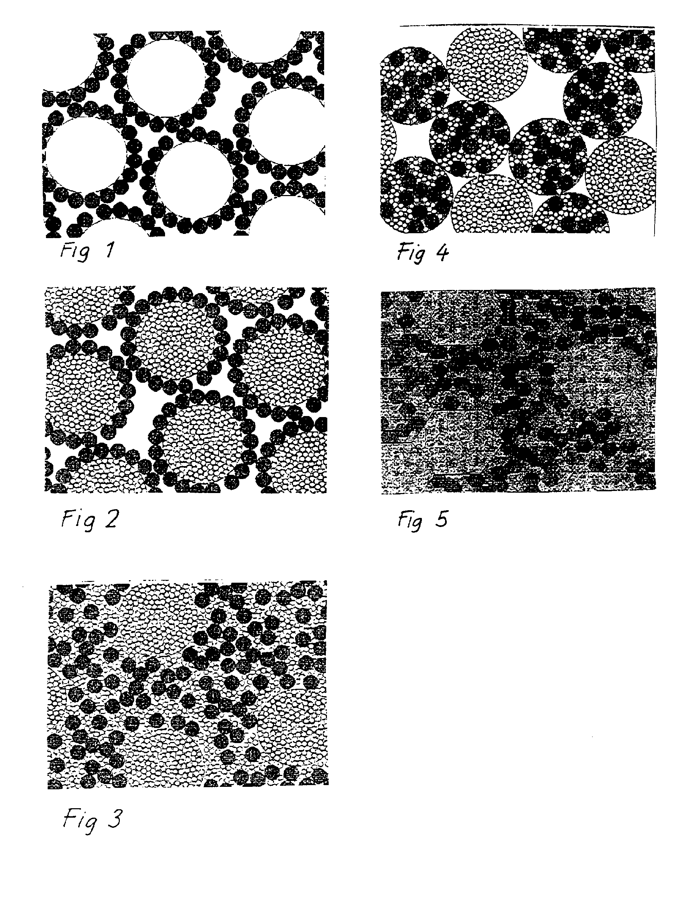

Fig. 1 : Eine Mischung aus einem groben Primärkorn, welches mit einem zweiten, feineren Korn beschichtet wurde. Schematische Darstellung, wie vom Stand der Technik bekannt.

Fig.2: Eine Mischung aus einem groben Sekundärkorn, welches mit einem feinen Primärkorn beschichtet wurde. Schematische Darstellung, wie vom Stand der Technik bekannt.

Fig.3: Eine Mischung aus einem nicht granulierten Composit-Pulver, besthend aus einem isolierenden Werkstoff und einem elektrisch leitfähigen Werkstoff, mit einem granulierten Pulver des reinen, nichtleitenden Werkstoffs. Schematische Darstellung.

Fig.4: Eine Mischung aus granuliertem Composit-Pulver, bestehend aus einem isolierenden Werkstoff und einem elektrisch leitfähigen Werkstoff, mit einem granulierten Pulver des reinen, nichtleitenden Werkstoffs. Schematische Darstellung.

Fig. 5: Gefüge eines erfindungsgemässen Composit-Werkstoffs. Schematische Darstellung.

Es wurden fünf Pulver bzw. Pulvermischungen vorbereitet:

1. $MoSi_2$
2. $Al_2O_3$
3. $Al_2O_3$ + 25 vol% $MoSi_2$
4. $Al_2O_3$ + 20 vol% $MoSi_2$
5. $Al_2O_2$ + 25 vol% $MoSi_2$ gemischt mit granuliertem $Al_2O_3$ im Verhältnis 1 : 1.

Aus diesen Pulvern bzw. Pulvermischungen wurden Probenkörper durch axiales Pressen hergestellt und diese anschliessend im Vakuum bei 1500°C für 2 Stunden gesintert. Alle Proben zeigten Dichten über 90% der theoretischen Dichte der jeweiligen Pulvermischung. Mittels 4-Punkt-Messung wurde der spezifische elektrische Widerstand der Probenkörper bestimmt:

| Werkstoff | Spezifischer elektrischer Widerstand Ohm cm |
|---|---|
| $MoSi_2$ | $2 . 10^{-5}$ |
| $Al_2O_3$ | $\infty$ |
| $Al_2O_3$ + 25 vol% $MoSi_2$ | $3 . 10^{-3}$ |
| $Al_2O_3$ + 20 vol% $MoSi_2$ | 2 |
| $Al_2O_3$ + 25 vol% $MoSi_2$ gemischt mit granuliertem $Al_2O_3$ im Verhältnis 1:1 | 2 |

Es war nicht zu erwarten, dass durch das Mischen der primären Pulvermischung $Al_2O_3$ + 25 vol% $MoSi_2$ mit granuliertem Aluminiumoxid eine Steigerung des spezifischen elektrischen Widerstandes um ungefähr drei Zehnerpotenzen möglich ist. Die gleiche Steigerung des Widerstandes wurde gefunden in Proben aus $Al_2O_3$ + 20 vol% $MoSi_2$, welche zum Vergleich hergestellt wurden. Damit wurde eine technisch einfache und leicht durchzuführende Methode gefunden, den elektrischen Widerstand eines Composit-Werkstoffs sehr exakt zu variieren.

Es sei noch bemerkt, dass diese Art der Herstellung eines Gefüges nicht nur gültig und anwendbar ist für die hier gezeigte Anwendung und Werkstoffkombination, sondern dass sie auch auf andere Systeme anwendbar ist, welche ebenfalls im Anwendungsgebiet der vorliegenden Erfindung enthalten sind.

**Patentansprüche**

1. Gesinterte Keramik, **dadurch gekennzeichnet, dass** sie aus folgenden Elementen besteht:

   - ungefähr 50 - 90 vol% eines elektr. isolierenden Werkstoffs aus der Gruppe der Oxide, Nitride oder Oxinitride, insbesondere $Al_2O_3$;
   - ungefähr 10 - 50 vol% eines elektrisch leitfähigen Werkstoffs aus der Gruppe der Uebergangsmetallsilicide, Uebergangsmetallcarbide, Uebergangsmetallboride, insbesondere $MoSi_2$;
   - 0 - 10 vol% eines Additives, welches die Sintereigenschaften des Composit-Werkstoffs beeinflusst, aus der Gruppe der Uebergangsmetalle, der Uebergangsmetallsilicide, Uebergangsmetalloxide, insbesondere Ni, $TiO_2$, $MnO_2$, $TiO_2$, $TiSi_2$;

2. Gesinterte Keramik nach Anspruch 1, **dadurch gekennzeichnet, dass**
   die isolierende Phase, die leitfähige Phase,sowie die Zusätze homogen über den gesamten Körper verteilt sind;

3. Gesinterte Keramik nach Anspruch 1, **dadurch gekennzeichnet, dass**
   die Phasen nicht homogen über den gesamten Körper verteilt sind, der Körper aber frei von einem makroskopischen Gradienten ist;

4. Gesinterte Keramik nach Anspruch 3, **dadurch gekennzeichnet, dass**
die inhomogene Verteilung dadurch erzeugt wird, dass aus Mischungen der Primärpulver Sprühgranulate (Sekundärkorn) hergestellt werden, welche verschieden hohe Anteile der leitfähigen Phase sowie der Zusätze aufweisen, diese Sekundärkörner anschliessend gemischt werden und diese Mischung zu einer gesinterten Keramik verarbeitet wird;

5. Gesinerte Keramik nach Anspruch 4, **dadurch gekennzeichnet, dass**
das Sekundärkorn eine mittlere Teilchengrösse von 10 - 250 µm, insbesondere 30 - 100 µm aufweist;

6. Verfahren zur Herstellung einer gesinterten Keramik nach Anspruch 3, **dadurch gekennzeichnet, dass**
die inhomogene Verteilung dadurch erzeugt wird, dass aus Mischungen der Primärpulver Granulate (Sekundärkorn) hergestellt werden, welche verschieden hohe Anteile der leitfähigen Phase sowie der Zusätze aufweisen, diese Sekundärkörner anschliessend gemischt werden und diese Mischung zu einer gesinterten Keramik verarbeitet wird.

7. Verfahren nach Anspruch 6, **dadurch gekennzeichnet, dass** die Sinterung durch druckloses Sintern im Vakuum oder in einer Atmosphäre aus Edelgasen oder Stickstoff oder Mischungen derselben realisiert wird;

8. Verfahren nach Anspruch 6, **dadurch gekennzeichnet, dass** die Sinterung bei Temperaturen'zwischen 1400°C und 1800°C, insbesodere jedoch zwischen 1500°C und 1650°C erfolgt;

9. Verfahren nach Anspruch 6, **dadurch gekennzeichnet, dass** die gesinterte Keramik einer Nachverdichtung durch heiss-isostatisches Pressen unterworfen wird.

Fig 1

Fig 2

Fig 3

Fig 4

Fig 5